# EUROPÄISCHE PATENTSCHRIFT

(11) **EP 2 872 808 B1**
(45) Veröffentlichungstag und Bekanntmachung des Hinweises auf die Patenterteilung: **29.11.2017**
(21) Anmeldenummer: 13753546.4
(22) Anmeldetag: 10.07.2013
(51) Int. Cl.: F16L 3/10

(54) **ROHRSCHELLE**
PIPE CLAMP
COLLIER POUR TUYAU

(30) Priorität: 11.07.2012 DE 102012106256
(43) Veröffentlichungstag der Anmeldung: 20.05.2015
(73) Patentinhaber: Sinn, Edgar Emil, 56587 Strassenhaus (DE)
(72) Erfinder: Sinn, Edgar Emil, 56587 Strassenhaus (DE)
(74) Vertreter: Wimmer, Stephan
(86) Internationale Anmeldenummer: PCT/DE2013/100256
(87) Internationale Veröffentlichungsnummer: WO 2014/008892

(56) Entgegenhaltungen:
- DE-A1-102007 058 577
- DE-A1-102009 027 818
- DE-U1- 9 403 542
- US-A- 2 193 426
- US-A- 3 352 582

## Beschreibung

Die vorliegende Erfindung ist auf eine Rohrschelle zum Umfassen und Halten eines Rohrs oder eines Schlauchs bezogen.

Zur Befestigung von Rohren für Wasser, Gase oder andere Fluide werden in der Regel Rohrschellen verwendet. Eine Rohrschelle weist einen Schellenkörper auf, der dazu ausgebildet ist, ein Rohr im Wesentlichen kreisförmig zu umschließen und zu halten. Der Schellenkörper ist oft mit einem Gewinde verbunden, mittels dessen er unmittelbar oder mittelbar beispielsweise mit einer Wand oder einer Decke eines Bauwerks oder mit einem Profilträger verbunden werden kann. Der Schellenkörper weist beispielsweise eine mittels einer Spannschraube verschließbare Öffnung und ein gegenüberliegendes Gelenk auf. Ein Rohr kann durch die Öffnung in den Schellenkörper eingelegt werden. Durch Anziehen der Schraube wird der Schellenkörper an die Außenseite des Rohres gedrückt.

Rohrschellen sollen einerseits kostengünstig herstellbar und von Handwerkern im Idealfall ohne Einarbeitungszeit schnell und sicher montier- und handhabbar sein. Es existieren zahlreiche verschiedene Bauarten, die jeweils spezifische Vor- und Nachteile aufweisen.

In DE 10 2004 032 053 A1 ist eine Rohrschelle mit einem elastischen Schellenkörper beschrieben. Um nach dem Einlegen eines Rohres die Rohschelle zu schließen und zu spannen, werden zwei Enden des elastischen Schellenkörpers mittels eines Rastverschlusses verbunden. Die Rohrschelle ist extrem einfach aufgebaut und entsprechend kostengünstig herstellbar. Die Rohrschelle kann schnell und mit nur einer Hand geschlossen und gespannt werden. Eine große mechanische Spannkraft ist jedoch nicht ohne Weiteres realisierbar.

In DE 32 35 329 C1 ist eine Schlauchschelle aus einem Blechband beschrieben. Die Schlauchschelle weist einen Rastverschluss mit zahlreichen Rastpositionen auf, der mittels eines Spezialwerkzeugs gespannt werden kann. Die Bildung des Rastverschlusses aus dem dünnwandigen Blechband hat entsprechende Nachteile für Festigkeit, erzielbare Spannkraft und Robustheit.

In DE 42 13 864 A1 und in EP 0 760 445 A1 sind Rohrschellen mit jeweils zwei halbkreisbogenförmigen Bügeln beschrieben. Die Bügel sind durch zwei Spannschrauben verbunden. Rohrschellen dieser und ähnlicher Bauarten sind weitverbreitet. Die beiden Spannschrauben, die zugehörigen Flansche und Gewinde an den Bügeln erhöhen jedoch Aufwand und Kosten der Herstellung. Ein einhändiges Schließen ist nicht ohne Weiteres möglich, zum Spannen müssen zwei Schrauben bewegt werden.

In der DE 199 46 042 A1 ist eine Rohrschelle mit wenigstens drei jeweils teilkreisförmigen und gelenkig miteinander verbundenen Bügelabschnitten beschrieben. Eine große Spannkraft kann nicht ohne Weiteres erzeugt werden.

In der DE 42 37 674 A1 und der EP 0 597 805 A1 ist eine Rohrschelle mit zwei Schellenhälften beschrieben, die auf der einen Seite mittels einer Spannschraube und auf der gegenüberliegenden Seite mittels einer Rastverbindung mit mehreren Rastpositionen verbunden sind. Rohrschellen dieser aufwendigen Bauart werden bis heute hergestellt und vertrieben.

In DE 298 12 939 U1 ist eine Rohrschelle aus zwei halbkreisförmigen Schellenhälften beschrieben, die auf der einen Seite mittels einer Schraubverbindung und auf der anderen Seite mittels einer Hakenverbindung verbunden werden.

In DE 10 2010 053 357 A1 ist eine Rohrschelle mit zwei Schellenbügeln beschrieben, die an der einen Seite mittels einer Spannschraube und an der gegenüberliegenden Seite mittels miteinander verhakbarer Gelenklaschen verbunden sind.

In DE 93 19 587 U1 ist eine Rohrschelle mit zwei halbkreisförmigen Schellenhälften beschrieben, die auf der einen Seite mittels einer Schraubverbindung und auf der anderen Seite mit einer formschlüssigen Verbindung mittels Nasen, die einander hintergreifen, verbunden sind.

In DE 10 2009 027 818 A1 ist eine Klemmschelle mit zweiteiligem Ring beschrieben. S- oder Z-förmig aus einem Blechstreifen herausgebogene Abschnitte greifen als Haken in korrespondierende Halteöffnungen ein.

In US 3,352,582 ist ein Schlauchhalter beschrieben, der aus zwei Teilen besteht, deren eine Enden durch eine Schraube und deren gegenüberliegende Enden durch Haken, die in Öffnungen eingreifen, zusammen-gehalten werden.

In US 2,193,426 ist eine Rohrschelle beschrieben. Erste Flansche zweier halbzylindrischer Körperabschnitte werden durch Schrauben, zweite Flansche werden durch S-förmig gebogene Zungen, die in korrespondierende Schlitze eingreifen, verbunden.

In DE 94 03 542 U1 ist eine Schelle zum Befestigen eines Bauteils an einem Stab oder Rohr beschrieben. Die Schelle umfasst zwei Teile, die ein Rohr umfassen können. Am ersten Teil ist eine nach außen vorstehende Rippe, am zweiten Teil ist ein hakenförmiger Ansatz mit einer nach innen offenen Nut, in die die Rippe eingreifen kann, vorgesehen.

In DE 10 2007 058 577 A1 ist eine Rohrschelle mit zwei aus Blechstreifen gebogenen Schellenbügeln beschrieben. Der erste Schellenbügel weist ein hakenförmig nach außen gebogenes Ende auf, Der zweite Schellenbügel weist ein spiralförmig gebogenes Ende auf.

Eine Aufgabe der vorliegenden Erfindung besteht darin, eine verbesserte Rohrschelle zu schaffen, insbesondere eine Rohrschelle, die einerseits möglichst kostengünstig herstellbar und andererseits möglichst einfach, schnell und sicher handhabbar und robust ist.

Diese Aufgabe wird durch die Gegenstände der unabhängigen Ansprüche gelöst.

Weiterbildungen sind in den abhängigen Ansprüchen angegeben.

An einer Rohrschelle müssen in der Regel mehrere Funktionen verwirklicht sein. Die Rohrschelle muss an mindestens einer Stelle geöffnet und verschlossen werden können, um ein Rohr (oder einen Schlauch) in die Rohrschelle einlegen und aus der Rohrschelle entnehmen zu können. Wenn große mechanische Kräfte aufzunehmen sind, kommt ein biegeflexibler Schellenkörper regelmäßig nicht in Betracht. Im Falle eines starren, nicht biegeflexiblen Schellenkörpers müssen zwei oder mehr den Schellenkörper bildende, jeweils starre Bügel gelenkig verbunden sein. Zum Herstellen einer kraftschlüssigen Verbindung zwischen Rohrschelle und Rohr und/oder zum Anpassen der Rohrschelle an Rohre unterschiedlicher Durchmesser oder Querschnitte ist ferner eine Spanneinrichtung vorzusehen.

Die drei genannten Funktionen - Verschluss, Gelenk und Spanneinrichtung - sind herkömmlich auf die beiden Verbindungspunkte zwischen den den Schellenkörper bildenden Bügeln verteilt. Gelenk und Verschluss sind dabei regelmäßig einander gegenüberliegend angeordnet. Bei den in den oben genannten DE 42 13 864 A1 und EP 0 760 445 A1 beschriebenen Rohrschelle mit zwei Spannschrauben ist auch das Spannen der Rohrschelle an beiden einander gegenüberliegenden Seiten möglich oder erforderlich.

Auch bei der in der DE 42 37 674 A1 beschriebenen Rohrschelle sind an beiden einander gegenüberliegenden Seiten bzw. Enden der Bügel Spanneinrichtungen vorgesehen, wenn auch sehr unterschiedliche. An der Seite, an der die Rohrschelle geöffnet und geschlossen werden kann, ist eine Rasteinrichtung mit mehreren Rastpositionen vorgesehen. An der gegenüberliegenden Seite bzw. an gegenüberliegenden Enden der Bügel ist eine Spannschraube vorgesehen.

Ausführungsformen der vorliegenden Erfindung beruhen auf der Idee, die drei genannten Funktionen - Verschluss, Gelenk und Spanneinrichtung - anders als beim Stand der Technik auf die Enden zweier Bügel einer Rohrschelle zu verteilen. Erste Enden der beiden Bügel sind durch eine Spanneinrichtung, insbesondere eine Spannschraube miteinander verbunden, die gleichzeitig als Gelenk fungiert. Die zweiten Enden der Bügel sind durch Hakeneinrichtungen miteinander verbindbar, die insbesondere lediglich die Funktion eines Verschlusses aufweisen und nicht zum Spannen der Rohrschelle vorgesehen sind. Die Hakeneinrichtungen können deshalb wesentlich einfacher bzw. konstruktiv deutlich weniger aufwendig ausgebildet sein, als beispielsweise die Rasteinrichtung gemäß der erwähnten DE 42 37 674 A1.

Eine Rohrschelle umfasst einen Schellenkörper mit einem ersten Bügel und einem zweiten Bügel, zum Umfassen und Halten eines Rohrs oder eines Schlauchs bilden, eine Spanneinrichtung zum Verbinden und Zusammenziehen eines ersten Endes des ersten Bügels und eines ersten Endes des zweiten Bügels, eine erste Hakeneinrichtung, die einstückig mit dem zweiten Ende des ersten Bügels ausgebildet ist, und eine korrespondierende zweite Hakeneinrichtung, die einstückig mit dem zweiten Ende des zweiten Bügels ausgebildet ist, zum formschlüssigen Verbinden der zweiten Enden der Bügel.

Jeder Bügel ist insbesondere ausgebildet, um das Rohr oder den Schlauch jeweils im Wesentlichen zur Hälfte zu umfassen, um ein Einlegen des Rohrs oder des Schlauchs in die Rohrschelle und ein Entnehmen daraus zu ermöglichen. Der erste Bügel und der zweite Bügel sind insbesondere jeweils im Wesentlichen halbkreisbogenförmig. Insbesondere wenn die Rohrschelle für ein Rohr oder einen Schlauch mit einem nicht-kreisförmigen Querschnitt vorgesehen und ausgebildet ist, können die beiden Bügel jeweils nichtkreisbogenförmig ausgebildet und an die Kontur des Querschnitts des zu umfassenden und zu haltenden Rohrs oder Schlauchs angepasst sein.

Die Spanneinrichtung umfasst insbesondere eine Spannschraube, die beispielsweise durch ein Loch bzw. eine Durchgangsöffnung an einem der beiden Bügel hindurchgreift und in ein Innengewinde am anderen der beiden Bügel eingreift. Das Loch oder die Durchgangsöffnung ist insbesondere so ausgebildet, dass ein mechanisches Spiel der Spannschraube in dem Loch bzw. der Durchgangsöffnung ein Bewegen des zugeordneten Bügels relativ zu der Spannschraube ermöglicht. Dadurch weist die Verbindung zwischen der Spannschraube und dem Bügel, durch den die Spannschraube hindurchgreift, gleichzeitig die Funktion eines Gelenks zwischen den beiden Bügeln auf.

Da die Hakeneinrichtungen nicht gleichzeitig die Funktion einer Spanneinrichtung aufweisen müssen, können sie konstruktiv besonders einfach ausgebildet sein. Dies kann hinsichtlich des Aufwands und der Kosten der Herstellung als auch hinsichtlich der mechanischen Robustheit der Rohrschelle vorteilhaft sein. Die Hakeneinrichtungen können so ausgebildet sein, dass die zweite Hakeneinrichtung einfach, schnell und sicher in die erste Hakeneinrichtung eingehakt werden kann, insbesondere mit nur einer Hand.
Bei einer Rohrschelle, wie sie hier beschrieben ist, sind insbesondere die erste Hakeneinrichtung starr am ersten Bügel und die zweite Hakeneinrichtung starr am zweiten Bügel angeordnet.
Insbesondere ist also weder zwischen der ersten Hakeneinrichtungen und anderen Bereichen des ersten Bügels noch zwischen der zweiten Hakeneinrichtung und anderen Bereichen des zweiten Bügels ein Festkörpergelenk oder ein anderer im Wesentlichen elastischer Abschnitt vorgesehen. Die erwähnte Einstückigkeit hat zur Folge, dass auch kein anderes Gelenk vorgesehen ist.
Starr im Sinne der vorliegenden Beschreibung ist eine mechanische Verbindung oder eine mechanische Struktur trotz der jedem Material und deshalb auch jedem realen Bauteil innewohnenden Elastizität, wenn die elastische (oder auch plastische) Verformbarkeit konstruktiv nicht im Vordergrund steht, insbesondere kein erwünschte oder für die Funktion erforderliche oder vorteilhafte Eigenschaft darstellt. Nicht ausgeschlossen sein sollen ferner eine Elastizität des ersten Bügels und eine Elastizität des zweiten Bügels jeweils als Ganzes.
Eine starre Anordnung der ersten Hakeneinrichtung am ersten Bügel und eine starre Anordnung der zweiten Hakeneinrichtung am zweiten Bügel können eine konstruktiv besonders einfache und mechanisch besonders robuste Ausgestaltung der Rohrschelle ermöglichen.
Bei einer Rohrschelle, wie sie hier beschrieben ist, ist die erste Hakeneinrichtung durch einen umgebogenen Randabschnitt am zweiten Ende des ersten Bügels gebildet.
Bei einer Rohrschelle, wie sie hier beschrieben ist, ist die zweite Hakeneinrichtung durch einen umgebogenen Randabschnitt am zweiten Ende des zweiten Bügels gebildet.

Die Randabschnitte sind insbesondere jeweils um mehr als 90 Grad, beispielsweise um einen Winkel im Bereich von 120 Grad bis 180 Grad oder im Bereich von 150 Grad bis 180 Grad, umgebogen, um eine formschlüssige Verbindung der zweiten Enden der Bügel nicht nur im Sinne eines labilen, sondern im Sinne eines stabilen mechanisch-geometrischen Gleichgewichts zu ermöglichen. Die Randabschnitte können jeweils rund (insbesondere kreisbogenförmig) oder eckig umgebogen sein. Im Sinne der mechanischen Festigkeit des umgebogenen Randabschnitts kann eine möglichst konstante Krümmung ohne ausgeprägte lokale Krümmungsmaxima vorteilhaft sein.

Die Randabschnitte sind insbesondere jeweils so umgebogen, dass im umgebogenen Bereich alle Krümmungsradien senkrecht oder im Wesentlichen senkrecht zur Mittelachse der Rohrschelle bzw. zur Symmetrieachse eines in die Rohrschelle eingelegten Rohrs oder Schlauchs sind. Insbesondere sind der Randabschnitt am zweiten Ende des zweiten Bügels nach innen (zu einem in die Rohrschelle eingelegten Rohr hin) und der Randabschnitt am zweiten Ende des ersten Bügels nach außen umgebogen oder umgekehrt.

Gerade im Vergleich zu den in den oben genannten Druckschriften offenbarten Rohrschellen, wird deutlich, dass die Ausbildung von Hakeneinrichtungen aus umgebogenen Randabschnitten eine konstruktive und hinsichtlich der Fertigung besonders einfache und kostengünstige Alternative darstellt.

Bei einer Rohrschelle, wie sie hier beschrieben ist, sind das zweite Ende des ersten Bügels und das zweite Ende des zweiten Bügels insbesondere ausgebildet, um bei der vorgesehenen formschlüssigen Verbindung der Hakeneinrichtungen eine Bewegung der zweiten Enden der Bügel relativ zueinander in Richtung parallel zur Mittelachse der Rohrschelle formschlüssig zu unterbinden.

Die Mittelachse der Rohrschelle ist insbesondere die Symmetrieachse eines in die Rohrschelle eingelegten kreiszylindermantelförmigen Rohrs. Wenn die Rohrschelle gespannt ist, kann zwischen den Hakeneinrichtungen auch für Relativkräfte parallel zur Mittelachse eine kraftschlüssige Verbindung bestehen. Insbesondere vor dem Spannen der Rohrschelle kann eine formschlüssige Unterbindung einer Relativbewegung parallel zur Mittelachse die Handhabung deutlich vereinfachen.

Eine Rohrschelle, wie sie hier beschrieben ist, umfasst ferner einen vorstehenden Bereich am zweiten Ende des zweiten Bügels, der ausgebildet ist, um in eine Ausnehmung am zweiten Ende des ersten Bügels einzugreifen.

Zusätzlich kann die Rohrschelle einen vorstehenden Bereich am zweiten Ende des ersten Bügels umfassen, der ausgebildet ist, um in eine Ausnehmung am zweiten Ende des zweiten Bügels einzugreifen.

Der vorstehende Bereich ist insbesondere nasenförmig oder zungenförmig ausgebildet. Der vorstehende Bereich ist insbesondere gekrümmt, und zwar insbesondere so, dass im Wesentlichen alle Krümmungsradien am vorstehenden Bereich senkrecht oder im Wesentlichen senkrecht zur Mittelachse der Rohrschelle bzw. zur Symmetrieachse eines in die Rohrschelle eingelegten Rohrs oder Schlauchs sind. Der vorstehende Bereich ist insbesondere L-und/oder hakenförmig oder im Wesentlichen L- und/oder hakenförmig, um in die Ausnehmung einzugreifen.

Die Ausnehmung ist in Gestalt einer fensterförmigen Öffnung bzw. eines Durchgangslochs ausgebildet. Der vorstehende Bereich und die Ausnehmung können ferner ausgebildet sein, um einen Teil der Zugkraft zwischen den Bügeln aufzunehmen.

Der in die Ausnehmung eingreifende vorstehende Bereich kann als Einrasthilfe oder Einhänghilfe für das Verbinden der beiden Hakeneinrichtungen an den zweiten Enden der Bügel vorgesehen und ausgebildet sein. Insbesondere kann das Eingreifen des vorstehenden Bereichs in die Ausnehmung eine korrekte relative Ausrichtung der zweiten Enden der Bügel und damit direkt oder indirekt auch eine korrekte formschlüssige Verbindung der Hakeneinrichtungen an den zweiten Enden der Bügel bewirken. Ferner kann das Eingreifen des vorstehenden Bereichs in die Ausnehmung eine Relativbewegung der zweiten Enden der Bügel in Richtung parallel zur Mittelachse der Rohrschelle unterbinden oder erschweren. Ferner kann das Eingreifen des vorstehenden Bereichs in die Ausnehmung eine korrekte relative Ausrichtung der zweiten Enden der Bügel und/oder eine korrekte formschlüssige Verbindung der Hakeneinrichtungen an den zweiten Enden der Bügel anzeigen.

Bei einer Rohrschelle, wie sie hier beschrieben ist, ist insbesondere der vorstehende Bereich zungenförmig ausgebildet und vorgesehen, um in einen Zwischenraum zwischen dem ersten Bügel und einem in die Rohrschelle eingelegten Rohr einzugreifen.

Der zungenförmige Bereich ist insbesondere als streifenförmige und gekrümmte Zunge am zweiten Ende des zweiten Bügels ausgebildet. Der zungenförmig ausgebildete Bereich ist insbesondere abgewinkelt. Der zungenförmig ausgebildete Bereich ist beispielsweise im Wesentlichen L-förmig oder im Wesentlichen hakenförmig abgewinkelt, so dass der zungenförmige Bereich durch die Ausnehmung hindurchgreifen und das Ende des zungenförmigen Bereichs parallel oder im Wesentlichen parallel am ersten Bügel der Rohrschelle anliegen können. Der zungenförmige Bereich kann zwischen dem ersten Bügel und einem in die Rohrschelle eingelegten Rohr eingequetscht und dabei kraftschlüssig in seiner vorgesehenen Position gehalten werden. Dies kann ein unbeabsichtigtes Öffnen oder Aufspringen der Rohschelle unterbinden oder erschweren.

Bei einer Rohrschelle, wie sie hier beschrieben ist, ist die Ausnehmung insbesondere in axialer Richtung von zwei zur Außenseite der Rohrschelle vorstehenden Sicken begrenzt.

Die Außenseite der Rohrschelle ist die von einem in die Rohrschelle eingelegten Rohr abgewandte bzw. nach radial außen orientierte Seite der Rohrschelle, insbesondere von deren Bügeln. Axiale Richtungen sind die beiden zur bereits erwähnten Mittelachse der Rohrschelle parallelen Richtungen. Die Sicken begrenzen die Ausnehmung in axialer Richtung, indem sie unmittelbar an Ränder der Ausnehmung angrenzen oder lediglich einen kleinen Abstand zu diesen aufweisen. Ein Abstand ist klein, wenn er nicht größer ist als Krümmungsradien an Flächen am vorstehenden Bereich, die die Ränder der Ausnehmung und die Sicken berühren können. Insbesondere bilden Flanken der Sicken gleichzeitig Ränder der Ausnehmung.

Die beschriebene Ausgestaltung der Ausnehmung und der Sicken kann eine Führungswirkung der Sicken beim Einführen des vorstehenden Bereichs in die Ausnehmung ermöglichen. Diese Führungswirkung kann die Handhabung der Rohrschelle insbesondere beim Schließen vereinfachen.

Bei einer Rohrschelle, wie sie hier beschrieben ist, verbindet insbesondere die Spanneinrichtung das erste Ende des ersten Bügels mit dem ersten Ende des zweiten Bügels gelenkig.

Bei einer Rohrschelle, wie sie hier beschrieben ist, umfasst die Spanneinrichtung insbesondere eine Schraube, die durch ein Langloch am ersten Ende des zweiten Bügels hindurchgreift und in ein Gewinde am ersten Ende des ersten Bügels eingreift.

Das Langloch ist insbesondere in einem Flansch am ersten Ende des zweiten Bügels angeordnet. Das Gewinde ist insbesondere in einem Flansch am ersten Ende des ersten Bügels angeordnet. Flansche sind jeweils insbesondere so ausgebildet, dass sie jeweils im Wesentlichen senkrecht bzw. in radialer Richtung vom zugeordneten Bügel abstehen. Das Langloch ist insbesondere so ausgebildet, dass es ein Schwenken des zweiten Bügels relativ zum ersten Bügel um eine Achse parallel zur Mittelachse der Rohrschelle um einen Winkel von mindestens 45 Grad, insbesondere ca. 60 Grad, erlaubt.

Im Fall einer vernachlässigbaren Dicke bzw. Materialstärke des Flanschs beträgt die Länge I des Langlochs zur Erzielung eines Schwenkwinkels α bei einem Durchmesser d der Schraube I = d/cos(α). Die Länge I des Langlochs muss somit mindestens das ca. 1,4-fache des Durchmessers d des Gewindes der Schraube aufweisen, um einen Schwenkwinkel von 45 Grad zu ermöglichen.

Bei einer Rohrschelle, wie sie hier beschrieben ist, ist insbesondere am ersten Ende des zweiten Bügels eine Vertiefung zur zumindest teilweisen Aufnahme des Kopfes der Schraube vorgesehen.

Die Vertiefung ist insbesondere durch Tiefziehen oder Prägen und insbesondere am erwähnten Flansch am ersten Ende des zweiten Bügels erzeugt. Die Vertiefung ist insbesondere im Wesentlichen kreisförmig und weist einen Durchmesser auf, der nicht oder nicht wesentlich größer als der Durchmesser des Kopfes der Schraube ist. Wenn die Vertiefung den Kopf der Schraube mit wenig oder ohne Spiel aufnimmt, kann dies eine formschlüssige Arretierung des zweiten Bügels relativ zur Schraube bewirken, die eine Bewegung des zweiten Bügels parallel zum Langloch unterbindet oder beschränkt. Dadurch kann - bei hinreichend steif ausgestalteten Bügeln - eine formschlüssige Verbindung der Hakeneinrichtungen an den zweiten Enden der Bügel verriegelt werden.

Insbesondere wenn die Rohrschelle ein Langloch umfasst, durch das die Schraube hindurchgreift, kann eine Vertiefung zur zumindest teilweisen Aufnahme des Kopfes der Schraube die Vormontage vereinfachen. Ohne eine Vertiefung sind zumindest die ersten Enden der Bügel relativ zueinander in Richtung parallel zu dem Langloch bewegbar. Durch die zumindest teilweise Aufnahme des Kopfes in der Vertiefung kann diese Relativbewegung der ersten Enden der Bügel und damit auch der gesamten Bügel formschlüssig teilweise oder vollständig unterbunden werden. Dadurch wiederum kann ein unbeabsichtigtes Lösen der Verbindung der Hakeneinrichtungen an den zweiten Enden der Bügel, das heißt ein unbeabsichtigtes Aufspringen der Rohrschelle, verhindert oder zumindest deutlich unwahrscheinlicher gemacht werden. Die Vertiefung kann somit eine deutliche Vereinfachung der Vormontage ermöglichen.

Im Ergebnis wurde mit Rohrschellen mit den hier beschriebenen Merkmalen bei der Montage eine Zeitersparnis von bis zu 70 Prozent gegenüber herkömmlichen Rohrschellen für vergleichbare Anwendungen erzielt.

Bei einer Rohrschelle, wie sie hier beschrieben ist, bilden die erste Hakeneinrichtung und die zweite Hakeneinrichtung insbesondere keine Rastverbindung.

Dies kann eine konstruktiv und fertigungstechnisch einfachere und mechanisch robustere Ausgestaltung ermöglichen. Dadurch unterscheidet sich die Rohrschelle insbesondere von der in der erwähnten DE 42 37 674 A1 beschriebenen Rohrschelle.

Nachfolgend werden Ausführungsbeispiele anhand der beigefügten Figuren näher erläutert. Es zeigen:
- Figur 1: eine schematische axonometrische Darstellung einer Rohrschelle;
- Figur 2: eine weitere schematische axonometrische Darstellung der Rohrschelle aus Figur 1;
- Figur 3: eine weitere schematische axonometrische Darstellung der Rohrschelle aus den Figuren 1 und 2;
- Figur 4: eine weitere schematische axonometrische Darstellung eines Teils der Rohrschelle aus den Figuren 1 bis 3;
- Figur 5: eine weitere schematische Darstellung der Rohrschelle aus den Figuren 1 bis 4;
- Figur 6: eine weitere schematische Darstellung der Rohrschelle aus den Figuren 1 bis 5;
- Figur 7: eine weitere schematische Darstellung der Rohrschelle aus den Figuren 1 bis 6;
- Figur 8: eine weitere schematische Darstellung der Rohrschelle aus den Figuren 1 bis 7;
- Figur 9: eine schematische Darstellung eines Schnitts durch die Rohrschelle aus den Figuren 1 bis 8;
- Figur 10: eine schematische Darstellung eines Teils einer weiteren Rohrschelle.

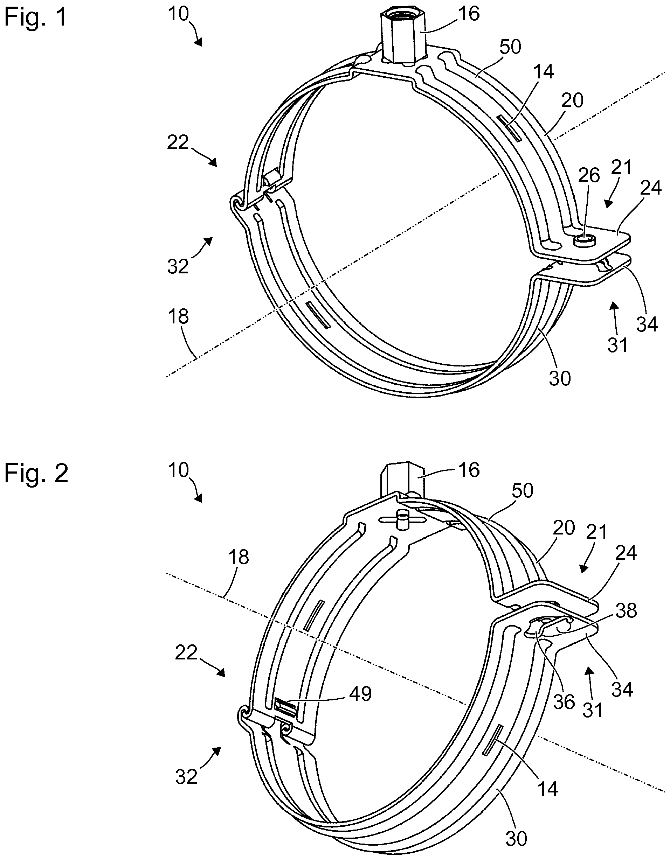

Figur 1 zeigt eine schematische axonometrische Darstellung einer Rohrschelle 10 mit einer Befestigungsmutter 16 zur Befestigung der Rohrschelle 10 an einer Gewindestange oder an einem anderen Bauteil mit einem korrespondierenden Außengewinde. Die Rohrschelle umfasst einen ersten Bügel 20 und einen zweiten Bügel 30, die jeweils im Wesentlichen halbkreisbogenförmig ausgebildet sind. Die Befestigungsmutter 16 ist im Wesentlichen in der Mitte des ersten Bügels 20 befestigt, insbesondere mit diesem verschweißt. Die Bügel 20, 30 sind insbesondere aus Metallblech durch Stanzen und mittels eines oder mehrerer Umformverfahren gefertigt.

Der erste Bügel 20 und der zweite Bügel 30 weisen jeweils mehrere Schlitze 14 zur Aufnahme oder Befestigung von elastischen Elementen auf, die in Figur 1 nicht dargestellt sind. Diese elastischen Elemente können mehrere Funktionen aufweisen, insbesondere die akustische Entkopplung der Rohrschelle 10 von einem durch die Rohrschelle 10 gehaltenen Rohr oder Schlauch, die Erhöhung der Reibung zwischen Rohrschelle 10 und einem von der Rohrschelle 10 gehaltenen Rohr oder Schlauch und/oder den Ausgleich geometrischer Unterschiede korrespondierender Flächen an der Innenseite der Rohrschelle 10 und an der Außenseite eines von der Rohrschelle 10 gehaltenen Rohrs oder Schlauchs.

Als Mittelachse 18 der Rohrschelle 10 wird die Achse eines in der vorgesehenen Weise in die Rohrschelle 10 eingelegten kreiszylindrischen Rohres bezeichnet.

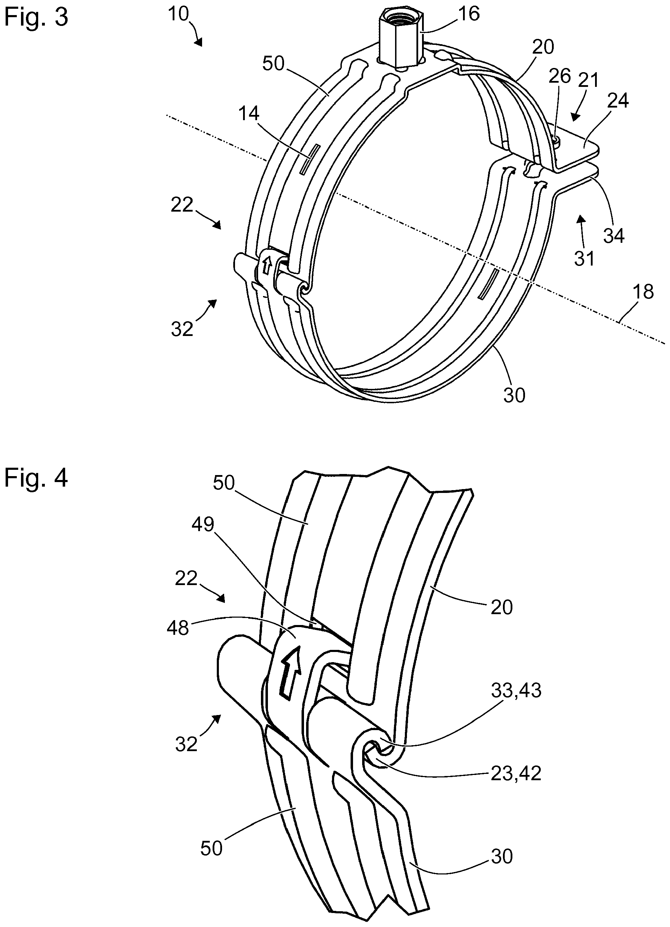

Der erste Bügel 20 weist ein erstes Ende 21 und ein zweites Ende 22 auf. Am ersten Ende 21 des ersten Bügels 20 ist ein Flansch 24 mit einem Innengewinde 26 vorgesehen. Am zweiten Ende 22 des ersten Bügels 20 sind eine Hakeneinrichtung und eine Ausnehmung vorgesehen, die unten mit Bezug auf die Figur 4 näher beschrieben sind.

Der zweite Bügel 30 weist ein erstes Ende 31 und ein zweites Ende 32 auf. Am ersten Ende 31 des zweiten Bügels 30 ist ein Flansch 34 vorgesehen. Im Flansch 34 am ersten Ende 31 des zweiten Bügels 30 ist ein Langloch vorgesehen, das in Figur 1 nicht sichtbar ist. Am Flansch 34 am ersten Ende 31 des zweiten Bügels 30 ist ferner eine Vertiefung vorgesehen, die ebenfalls in Figur 1 nicht sichtbar ist. Am zweiten Ende 32 des zweiten Bügels 30 sind eine Hakeneinrichtung und eine Zunge vorgesehen, die unten mit Bezug auf Figur 4 beschrieben sind.

An beiden Bügeln 20, 30 sind Sicken 50 vorgesehen, die die Bügel 20, 30 materialsparend versteifen. Die Sicken 50 sind nach außen gerichtet bzw. von einem in der Rohrschelle 10 aufgenommenen Rohr oder Schlauch weg orientiert. Die Sicken 50 können weitere Funktionen und Aufgaben haben, beispielsweise eine formschlüssige Verbindung mit dem oder den erwähnten elastischen Elementen.

Figur 2 zeigt eine weitere schematische axonometrische Darstellung der Rohrschelle 10 aus Figur 1. Im Unterschied zur Figur 1 sind bei der Blickrichtung bzw. dem Beobachterstandpunkt der Figur 2 das bereits erwähnte Langloch 36 und die bereits erwähnte Vertiefung 38 am Flansch 34 am ersten Ende 31 des zweiten Bügels 30 erkennbar.

Das Langloch 36 erstreckt sich senkrecht zur Mittelachse 18 der Rohrschelle 10. Die Länge des Langlochs 36 ist bei dem dargestellten Beispiel größer als der Durchmesser der im Wesentlichen kreisförmigen Vertiefung 38. Die Vertiefung befindet sich bei dem dargestellten Beispiel im Wesentlichen in der Mitte des Langlochs 36. Bei der für den geschlossenen und gespannten Zustand der Rohrschelle 10 vorgesehenen und in den Figuren 1 und 2 dargestellten relativen Anordnung der Bügel 20, 30 ist die Achse des Innengewindes 26 (vgl. Figur 1) am Flansch 24 am ersten Ende 21 des ersten Bügels 20 im Wesentlichen mittig zum Langloch 36 und zur Vertiefung 38 am Flansch 34 am ersten Ende 31 des zweiten Bügels 30 ausgerichtet.

Am zweiten Ende 22 des ersten Bügels 20 ist eine Ausnehmung 49 in Gestalt eines rechteckigen Fensters vorgesehen. Weitere Merkmale und Eigenschaften der Bügel 20, 30 an deren zweiten Enden 22, 32 sind unten mit Bezug auf Figur 4 näher beschrieben.

Figur 3 zeigt eine weitere schematische axonometrische Darstellung der Rohrschelle 10 aus den Figuren 1 und 2. Figur 3 zeigt die Rohrschelle 10 aus einer weiteren Blickrichtung bzw. von einem weiteren Beobachterstandort aus, um die Erkennbarkeit der bereits beschriebenen Eigenschaften und Merkmale der Rohrschelle 10 weiter zu verbessern.

Figur 4 zeigt eine schematische axonometrische Darstellung eines Teils der Rohrschelle 10 aus den Figuren 1 bis 3. Die Darstellung in Figur 4 ist gegenüber den Darstellungen in den Figuren 1 bis 3 vergrößert und zeigt im Wesentlichen nur die zweiten Enden 22, 32 der Bügel 20, 30. In Figur 4 sind die Ausnehmung 49 am zweiten Ende 22 des ersten Bügels 20 und mehrere Sicken 50 erkennbar, die oben erwähnt sind. Ferner sind in Figur 4 weitere Eigenschaften und Merkmale erkennbar, die nachfolgend beschrieben sind.

Der erste Bügel 20 weist am zweiten Ende 22 eine erste Hakeneinrichtung 42 in Gestalt zweier umgebogener Randabschnitte 23 auf. Der zweite Bügel 30 weist am zweiten Ende 32 eine zweite Hakeneinrichtung 43 in Gestalt zweier umgebogener Randabschnitte 33 auf. Die Randabschnitte 23, 33 sind jeweils um einen Winkel zwischen 150 Grad und 170 Grad umgebogen. Die umgebogenen Randabschnitte 23, 33 weisen jeweils eine im Wesentlichen konstante Krümmung auf, wobei alle Krümmungsvektoren senkrecht zur Mittelachse 18 der Rohrschelle 10 (vgl. Figuren 1 bis 3) sind. In Schnittebenen senkrecht zur Mittelachse 18 der Rohrschelle 10 weisen die umgebogenen Randabschnitte 23, 33 der Bügel 20, 30 jeweils kreisbogenförmige Querschnitte auf. Die Randabschnitte 23 am zweiten Ende 22 des ersten Bügels 20 sind nach außen umgebogen, die Randabschnitte 33 am zweiten Ende 32 des zweiten Bügels 30 sind nach innen umgebogen. Der zweite Bügel 30 ist am zweiten Ende 32 nahe dem umgebogenen Randabschnitt 33 gekröpft.

Die umgebogenen Randabschnitte 23 am zweiten Ende 22 sind ebenso wie Sicken 50 symmetrisch am ersten Bügel 20 angeordnet. Die umgebogenen Randabschnitte 33 am zweiten Ende 32 des zweiten Bügels 30 sind ebenso wie Sicken 50 symmetrisch am zweiten Bügel 30 angeordnet. Je ein umgebogener Randabschnitt 23 am zweiten Ende 22 des ersten Bügels 20 und ein umgebogener Randabschnitt 33 am zweiten Ende 32 des zweiten Bügels 30 sind korrespondierend ausgebildet und angeordnet.

Zwischen den umgebogenen Randabschnitten 33 am zweiten Ende 32 des zweiten Bügels 30 ist eine Zunge 48 vorgesehen, die mit dem zweiten Bügel 30 einstückig ausgebildet ist. Die Zunge 48 ist abgewinkelt und weist einen Querschnitt auf, der zu der fensterförmigen Ausnehmung 49 am zweiten Ende 22 des ersten Bügels 20 korrespondiert.

In den Figuren 1 bis 4 ist die Rohrschelle 10 in einem geschlossenen Zustand dargestellt. Insbesondere in Figur 4 ist erkennbar, dass dabei die umgebogenen Randabschnitte 23, 33 an den zweiten Enden 22, 32 der Bügel 20, 30 so ineinandergreifen, dass die zweiten Enden 22, 32 der Bügel 20, 30 formschlüssig verbunden sind. Anders ausgedrückt sind die umgebogenen Randabschnitte 33 am zweiten Ende 32 des zweiten Bügels 30 in die umgebogenen Randabschnitte 23 am zweiten Ende 22 des ersten Bügels 20 eingehakt.

Bei der in den Figuren 1 bis 4 dargestellten geschlossenen Konfiguration der Rohrschelle 10 greift die Zunge 48 am zweiten Ende 32 des zweiten Bügels 30 in die Ausnehmung 49 am zweiten Ende 22 des ersten Bügels 20 ein. Der Formschluss zwischen der Zunge 48 und der Ausnehmung 49 verhindert eine Bewegung der zweiten Enden 22, 32 der Bügel 20, 30 relativ zueinander in Richtung parallel zur Mittelachse 18 der Rohrschelle 10 (vgl. Figuren 1 bis 3), die anderenfalls möglich wäre. Schon bei der Montage der Rohrschelle 10 kann der Eingriff der Zunge 48 am zweiten Ende 32 des zweiten Bügels 30 in die Ausnehmung 49 am zweiten Ende 22 des ersten Bügels 20 eine korrekte relative Ausrichtung der umgebogenen Randabschnitte 23, 33 anzeigen und/oder bewirken.

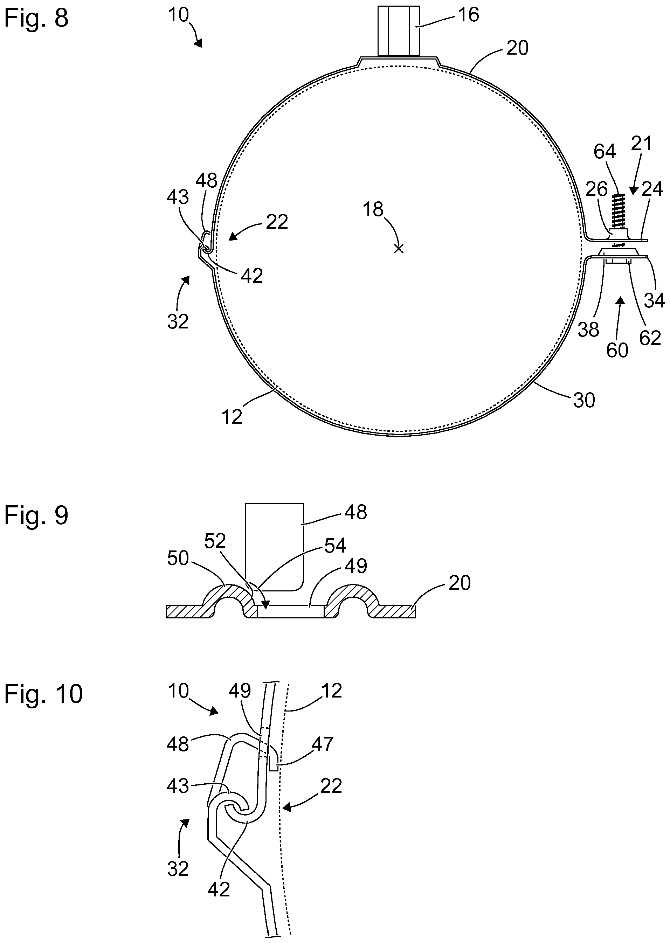

Ferner können die Zunge 48 und die Ausnehmung 49 so ausgebildet sein, dass durch Formschluss der Zunge 48 mit der Ausnehmung 49 ein Teil einer Zugkraft zwischen den Bügeln 20, 30 aufgenommen werden kann. Wie unten anhand der Figur 9 dargestellt ist, kann eine mechanische Wechselwirkung zwischen der Zunge 48 am zweiten Ende 32 des zweiten Bügels 30 mit den Sicken 50 am ersten Bügel 20 ferner beim Schließen der Rohrschelle 10 eine korrekte relative Ausrichtung der zweiten Enden 22, 32 der Bügel 20, 30 unterstützen.

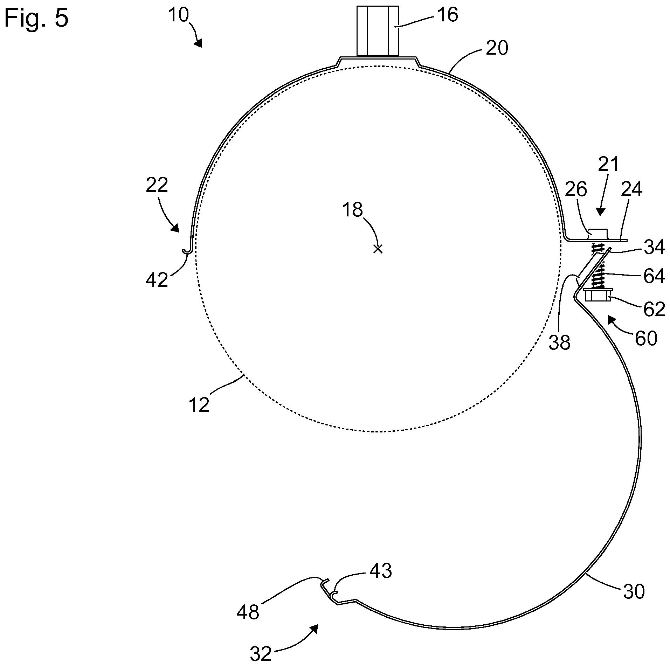

Figur 5 zeigt eine weitere schematische Darstellung der Rohrschelle aus den Figuren 1 bis 4. Die Darstellung in Figur 5 entspricht einer Draufsicht auf die Rohrschelle 10 parallel zu deren Mittelachse 18. Anders ausgedrückt ist die Zeichenebene der Figur 5 senkrecht zur Mittelachse 18. Im Sinne einer einfachen und übersichtlichen Darstellung sind die Sicken 50 in Figur 5 nicht gezeigt.

Im Unterschied zu den Darstellungen in den Figuren 1 bis 4 sind in Figur 5 eine Kontur eines von der Rohrschelle 10 zu umfassenden und zu haltenden Rohrs 12 angedeutet und eine Spannschraube 60 dargestellt. Die Spannschraube 60 weist einen Kopf 62 und ein Gewinde 64 auf. Die Spannschraube 60 greift durch das Langloch 36 am Flansch 34 am ersten Ende 31 des zweiten Bügels 30 (vgl. Figur 2) hindurch und in das korrespondierende Innengewinde 26 am Flansch 24 am ersten Ende 21 des ersten Bügels 20 ein.

Das Langloch 36 ist so lang, dass der zweite Bügel 30 relativ zum ersten Bügel 20 in einem großen Winkelbereich um eine Schwenkachse parallel zur Mittelachse 18 geschwenkt werden kann. In Figur 5 ist der zweite Bügel 30 in einer Position dargestellt, in der die Rohrschelle 10 weit geöffnet ist und das Rohr 12 in die Rohrschelle 10 eingelegt oder aus dieser entnommen werden kann.

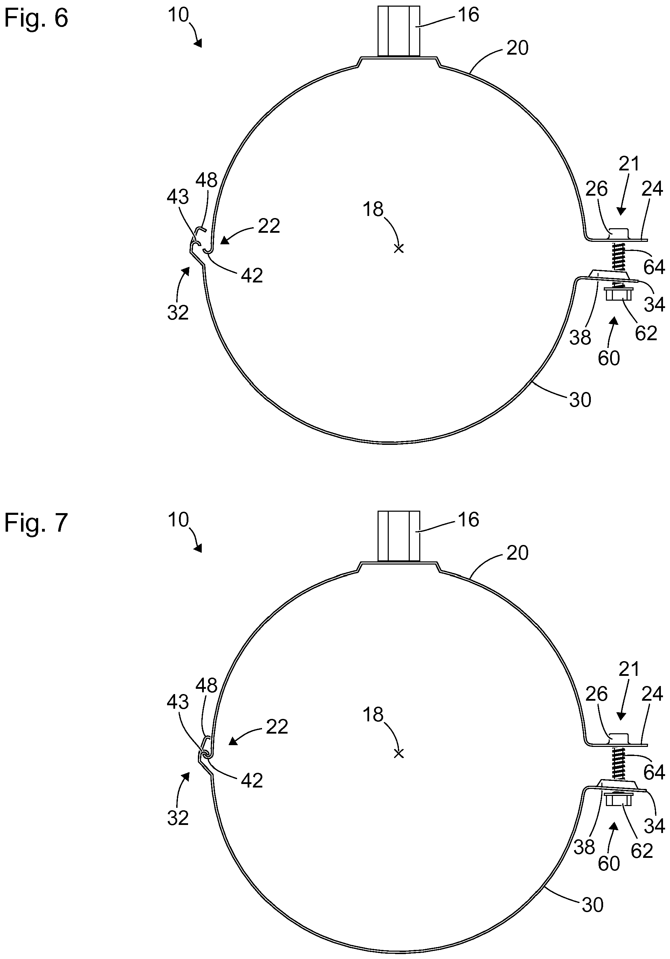

Figur 6 zeigt eine weitere schematische Darstellung der Rohrschelle 10 aus den Figuren 1 bis 5. Die Art der Darstellung entspricht weitgehend derjenigen der Figur 5. Insbesondere ist die Zeichenebene der Figur 6 senkrecht zur Mittelachse 18 der Rohrschelle 10.

Figur 6 zeigt die Rohrschelle 10 in einer Konfiguration unmittelbar vor dem Schließen der Rohrschelle. Von der in Figur 5 gezeigten Konfiguration bis zu der in Figur 6 gezeigten Konfiguration wird der zweite Bügel 30 so um eine Achse parallel zur Mittelachse 18 der Rohrschelle 10 geschwenkt, dass die zweiten Enden 22, 32 der Bügel 20, 30 aufeinander zu und schließlich die Hakeneinrichtungen 42, 43 aneinander vorbeibewegt werden.

Figur 7 zeigt eine weitere schematische Darstellung der Rohrschelle aus den Figuren 1 bis 6, die hinsichtlich der Art der Darstellung den Figuren 5 und 6 entspricht. Insbesondere ist die Zeichenebene der Figur 7 senkrecht zur Mittelachse 18 der Rohrschelle 10.

Figur 7 zeigt eine Konfiguration der Rohrschelle 10, bei der die Hakeneinrichtungen 42, 43 an den zweiten Enden 22, 32 der Bügel 20, 30 bereits formschlüssig verbunden bzw. ineinander eingehakt sind. Die Spannschraube 60 befindet sich noch in der Position, in der sie auch in den Figuren 5 und 6 gezeigt ist.

Beim Übergang von der in Figur 6 gezeigten Konfiguration zu der in Figur 7 gezeigten Konfiguration findet eine Verschiebung des zweiten Bügels 30 relativ zum ersten Bügel 20 und zur Spannschraube 60 in einer Richtung parallel zur Zeichenebene, senkrecht zur Mittelachse 18 der Rohrschelle 10 und senkrecht zur Achse der Spannschraube 60 statt. Dabei wird die Spannschraube 60, insbesondere deren Gewinde 64 innerhalb des Langlochs 36 (vgl. Figur 2) verschoben.

Figur 8 zeigt eine weitere schematische Darstellung der Rohrschelle aus den Figuren 1 bis 7, die hinsichtlich der Art der Darstellung den Figuren 5 bis 7 entspricht. Insbesondere ist die Zeichenebene senkrecht zur Mittelachse 18 der Rohrschelle 10.

Figur 8 zeigt die Rohrschelle 10 in einem geschlossenen und gespannten Zustand. Die Bügel 20, 30 liegen am Rohr 12 an. Zum Übergang von der in Figur 7 gezeigten Konfiguration zu der in Figur 8 gezeigten Konfiguration wird die Spannschraube 60 angezogen bzw. durch Rotation des Schraubenkopfs 62 im Uhrzeigersinn in das Innengewinde 26 am Flansch 24 am ersten Ende 21 des ersten Bügels 20 eingeschraubt. Dabei schwenkt der zweite Bügel 30 um eine Schwenkachse parallel zur Mittelachse 18 der Rohrschelle 10 an den Hakeneinrichtungen 42, 43, und der Flansch 34 am ersten Ende 31 des zweiten Bügels 30 wird dem Flansch 24 am ersten Ende 21 des ersten Bügels 20 angenähert.

Bei der in Figur 8 gezeigten Konfiguration befindet sich der Schraubenkopf 62 teilweise innerhalb der Vertiefung 38 am Flansch 34 am ersten Ende 31 des zweiten Bügels 30. Formschluss zwischen dem Kopf 62 der Schraube 60 und der Vertiefung 38 unterbinden eine Bewegung des zweiten Bügels 30 relativ zum ersten Bügel 20. Dadurch (und durch Formschluss zwischen den Bügeln 20, 30 und dem Rohr 12) ist ein Öffnen der Rohrschelle 10 in Richtung der in Figur 6 gezeigten relativen Anordnung der Hakeneinrichtungen 42, 43 unterbunden.

Figur 9 zeigt eine schematische Darstellung eines Schnitts durch den ersten Bügel 20 nahe seinem zweiten Ende 22 (vgl. Figuren 1 bis 8). Die Schnittebene der Figur 9 ist senkrecht zu den Zeichenebenen der Figuren 5 bis 8 und enthält die Mittelachse 18 der Rohrschelle 10.

Die Schnittebene der Figur 9 schneidet die Ausnehmung 49 am zweiten Ende 22 des ersten Bügels 20 (vgl. Figuren 1 bis 8). In Figur 9 sind die bogenförmigen Querschnitte der beiden Sicken 50 beiderseits der Ausnehmung 49 erkennbar. Die Ausnehmung 49 wird in Richtung parallel zur Schnittebene der Figur 9 im Wesentlichen durch die Sicken 50 bzw. deren Flanken 52 begrenzt. Abstände zwischen den Rändern der Ausnehmung 49 einerseits und den Flanken 52 der Sicken 50 andererseits sind kleiner oder nicht größer als in Figur 9 erkennbare Krümmungsradien an der Zunge 48. Dies bewirkt, dass die Zunge 48 ausgehend von der in Figur 9 dargestellten etwas exzentrischen Position an der Flanke 42 der Sicke 50 entlang in die Ausnehmung 49 gleiten kann. Diese Bewegung ist durch einen Pfeil 54 angedeutet. Auf diese Weise wirken die Sicken 50 am ersten Bügel 20, insbesondere deren innere Flanken 52, beim Schließen der Rohrschelle 10 bzw. beim Übergang zwischen der in Figur 6 gezeigten Konfiguration und der in Figur 7 gezeigten Konfiguration führend bzw. zentrierend. Dies vereinfacht die Handhabung der Rohrschelle 10 beim Schließen.

Figur 10 zeigt eine schematische Darstellung eines Teils einer weiteren Rohrschelle 10, die in einigen Merkmalen und Eigenschaften der oben anhand der Figuren 1 bis 9 dargestellten Rohrschelle ähnelt. Die Art der Darstellung in Figur 10 entspricht derjenigen der Figuren 5 bis 8. Figur 10 zeigt aber im Unterschied zu den Figuren 5 bis 8 keine Darstellung der gesamten Rohrschelle 10, sondern eine vergrößerte Darstellung eines Teils der Rohrschelle 10. Der dargestellte Teil der Rohrschelle 10 umfasst insbesondere die zweiten Enden 22, 32 der Bügel 20, 30.

Die in Figur 10 dargestellte Konfiguration ähnelt der in Figur 8 dargestellten Konfiguration. Nachfolgend sind nur Merkmale und Eigenschaften beschrieben, die von den oben anhand der Figuren 1 bis 9 dargestellten verschieden sind. In Figur 10 nicht dargestellte und nachfolgend nicht beschriebene Merkmalen und Eigenschaften der Rohrschelle 10 ähneln oder entsprechen insbesondere den oben anhand der Figuren 1 bis 9 dargestellten.

Die in Figur 10 dargestellte Rohrschelle 10 unterscheidet sich von der oben anhand der Figuren 1 bis 9 dargestellten insbesondere dadurch, dass die Zunge 48 etwas länger ist und nahe ihrem Ende 47 eine weitere Krümmung aufweist. Die Zunge 48 greift durch die Ausnehmung 49 am zweiten Ende 22 des ersten Bügels 20 hindurch. Das Ende 47 der Zunge 48 liegt an der Innenseite des ersten Bügels 20 an. Das Ende 47 der Zunge 48 befindet sich somit zwischen dem ersten Bügel 20 und einem in die Rohrschelle 10 eingelegten Rohr 12. Das Ende 47 der Zunge 48 kann somit zwischen dem ersten Bügel 20 und dem in die Rohrschelle 10 eingelegten Rohr 12 eingequetscht und kraftschlüssig gehalten sein. Dazu kann ein in den Figuren nicht dargestelltes Profilelement aus Gummi oder einem anderen elastischen Material beitragen, das die Reibungskraft, insbesondere die Haftreibung, zwischen dem Ende 47 der Zunge 48 und dem Rohr 12 und/oder zwischen dem Ende 47 der Zunge 48 und dem ersten Bügel 20 erhöht.

Das beschriebene kraftschlüssige Halten des Endes 47 der Zunge 48 zwischen dem ersten Bügel 20 und einem in die Rohrschelle 10 eingelegten Rohr 12 kann dazu beitragen, dass ein Öffnen der Rohrschelle 10 unterbunden ist.

### Bezugszeichenliste:

- 10: Rohrschelle
- 12: Rohr
- 14: Schlitz zur Aufnahme von elastischem Element
- 16: Befestigungsmutter an Rohrschelle 10
- 18: Mittelachse der Rohrschelle 10
- 20: erster Bügel
- 21: erstes Ende des ersten Bügels 20
- 22: zweites Ende des ersten Bügels 20
- 23: Randabschnitt am zweiten Ende 22 des ersten Bügels 20
- 24: Flansch am ersten Ende 21 des ersten Bügels 20
- 26: Innengewinde am Flansch 24 am ersten Ende 21 des ersten Bügels 20
- 30: zweiter Bügel
- 31: erstes Ende des zweiten Bügels 30
- 32: zweites Ende des zweiten Bügels 30
- 33: Randabschnitt am zweiten Ende 32 des zweiten Bügels 30
- 34: Flansch am ersten Ende 31 des zweiten Bügels 30
- 36: Langloch am Flansch 34 am ersten Ende 31 des zweiten Bügels 30
- 38: Vertiefung im Flansch 34 am ersten Ende 31 des zweiten Bügels 30
- 42: Hakeneinrichtung am ersten Bügel 20
- 43: Hakeneinrichtung am zweiten Bügel 30
- 47: Ende der Zunge 48 am zweiten Ende 32 des zweiten Bügels 30
- 48: Zunge am zweiten Ende 32 des zweiten Bügels 30
- 49: Ausnehmung am zweiten Ende 22 des ersten Bügels 20
- 50: Sicke
- 52: Flanke der Sicke 50
- 54: Bewegung
- 60: Spannschraube
- 62: Kopf der Spannschraube 40
- 64: Gewinde an der Spannschraube 40

## Patentansprüche

1. Rohrschelle (10), mit:
einen Schellenkörper mit einem ersten Bügel (20) und einem zweiten Bügel (30), zum Umfassen und Halten eines Rohrs (12) oder eines Schlauchs;
einer Spanneinrichtung (26, 60), zum Verbinden und Zusammenziehen eines ersten Endes (21) des ersten Bügels (20) und eines ersten Endes (31) des zweiten Bügels (30);
einer ersten Hakeneinrichtung (42), die einstückig mit dem zweiten Ende (22) des ersten Bügels (20) ausgebildet und durch einen umgebogenen Randabschnitt (23) am zweiten Ende (22) des ersten Bügels (20) gebildet ist, und einer korrespondierenden zweiten Hakeneinrichtung (43), die einstückig mit dem zweiten Ende (32) des zweiten Bügels (30) ausgebildet und durch einen umgebogenen Randabschnitt (33) am zweiten Ende (32) des zweiten Bügels (30) gebildet ist, zum formschlüssigen Verbinden der zweiten Enden (22, 32) der Bügel (20, 30),
**gekennzeichnet durch**
eine fensterförmige Ausnehmung (49) am zweiten Ende (22) des ersten Bügels (20);
einen vorstehenden Bereich (48) am zweiten Ende (32) des zweiten Bügels (30), der ausgebildet ist, um in die fensterförmige Ausnehmung (49) am zweiten Ende (22) des ersten Bügels (20) einzugreifen.

2. Rohrschelle (10) nach dem vorangehenden Anspruch, bei der das zweite Ende (22) des ersten Bügels (20) und das zweite Ende (32) des zweiten Bügels (30) ausgebildet sind, um bei der vorgesehenen formschlüssigen Verbindung der Hakeneinrichtungen (42, 43) eine Bewegung der zweiten Enden (22, 32) der Bügel (20, 30) relativ zueinander in Richtung parallel zur Mittelachse (18) der Rohrschelle (10) formschlüssig zu unterbinden.

3. Rohrschelle (10) nach dem vorangehenden Anspruch, bei der der vorstehende Bereich (48) zungenförmig ausgebildet und vorgesehen ist, um in einen Zwischenraum zwischen dem ersten Bügel (20) und einem in die Rohrschelle (10) eingelegten Rohr (12) einzugreifen.

4. Rohrschelle (10) nach dem vorangehenden Anspruch, bei der die Ausnehmung (49) in axialer Richtung von zwei zur Außenseite der Rohrschelle (10) vorstehenden Sicken (50) begrenzt ist.

5. Rohrschelle (10) nach einem der vorangehenden Ansprüche, bei der die Spanneinrichtung (26, 60) das erste Ende (21) des ersten Bügels (20) mit dem ersten Ende (31) des zweiten Bügels (30) gelenkig verbindet.

6. Rohrschelle (10) nach einem der vorangehenden Ansprüche, bei der die Spanneinrichtung eine Schraube (60) umfasst, die durch ein Langloch (36) am ersten Ende (31) des zweiten Bügels (30) hindurchgreift und in ein Gewinde (26) am ersten Ende (21) des ersten Bügels (20) eingreift.

7. Rohrschelle (10) nach dem vorangehenden Anspruch, bei der am ersten Ende (31) des zweiten Bügels (30) eine Vertiefung (38) zur zumindest teilweisen Aufnahme des Kopfes (62) der Schraube (60) vorgesehen ist.

8. Rohrschelle (10) nach einem der vorangehenden Ansprüche, bei der die erste Hakeneinrichtung (42) und die zweite Hakeneinrichtung (43) keine Rastverbindung bilden.

## Claims

1. Pipe clamp (10), comprising:
a clamp body having a first bracket (20) and a second bracket (30), for enclosing and supporting a pipe or a hose;
tensioning means (26, 60) for connecting and contracting a first end (21) of the first bracket (20) and a first end (31) of the second bracket (30);
a hook means (42) formed integrallly with the second end (22) of the first bracket (20) and formed by a bent edge portion (23) at the second end (22) of the first bracket (20), and a corresponding second hook means (43) formed integrally with the second end (32) of the second bracket (30) and formed by a bent edge portion (33) at the second end (32) of the second bracket (30), for positively connecting the second ends (22, 32) of the brackets (20, 30),
**characterized by**
a window-shaped recess (49) at the second end (22) of the first bracket (20);
a protruding portion (48) at the second end (32) of the second bracket (30) configured to engage the window-shaped recess (49) at the second end (22) of the first bracket (20).

2. Pipe clamp (10) according the preceding claim, wherein the second end (22) of the first bracket (20) and the second end (32) of the second bracket (30) are configured to positively inhibit, in the intended positive connection of the hook means (42, 43), a movement of the second ends (22, 32) of the brackets (20, 30) relative to each other in a direction parallel to the central axis (18) of the pipe clamp (10).

3. Pipe clamp (10) according to the preceding claim, wherein the protruding portion (48) is configured tongue-shaped and is provided to engage in an interspace between the first bracket (20) and a pipe (12) inserted into the pipe clamp (10).

4. Pipe clamp (10) according to the preceding claim, wherein the recess (49) is delimited in the axial direction by two pleats (50) protruding towards the outside of the pipe clamp (10).

5. Pipe clamp (10) according to one of the preceding claims, wherein the tensioning means (26, 60) articulatedly connects the first end (21) of the first bracket (20) and the first end (31) of the second bracket (30).

6. Pipe clamp (10) according to the preceding claim, wherein the tensioning means comprises a screw (60) protruding an elongated hole (36) at the first end (31) of the second bracket (30) and engaging a thread (26) at the first end (21) of the first bracket (20).

7. Pipe clamp (10) according to the preceding claim, wherein a dimple (38) for at least partially accommodating the head (62) of the screw (60) is provided at the first end (31) of the second bracket (30).

8. Pipe clamp (10) according to one of the preceding claims, wherein the first hook means (42) and the second hook means (43) do not form a latching connection.

## Revendications

1. Collier de serrage (10) comprenant:
un corps de serrage présentant un premier cintre (20) et un second cintre (30) pour entourer et supporter un tube (12) ou un tuyau ;
un dispositif de serrage (26, 60) pour connecter et resserrer une première extrémité (21) du premier cintre (20) et une première extrémité (31) du second cintre (30) ;
un premier dispositif de crochet (42) intégral avec la seconde extrémité (22) du premier cintre (20) et qui est formé par une partie de rebord (23) rabattu à la deuxième extrémité (22) du premier cintre (20), et un second dispositif de crochet (43) correspondant intégral avec la deuxième extrémité (32) du second cintre (30) et qui est formé par une partie de rebord (33) rabattu à la deuxième extrémité (32) du second cintre (30), pour le raccordement par emboîtement des secondes extrémités (22, 32) des cintres (20, 30),
**caractérisé par**
un évidement (49) en forme de fenêtre à la seconde extrémité (22) du premier cintre (20) ;
une partie en saillie (48) à la seconde extrémité (32) du second cintre (30) qui est adaptée pour se loger dans l'évidement (49) en forme de fenêtre à la seconde extrémité (22) du premier cintre (20).

2. Collier de serrage (10) selon la revendication précédente, dans lequel la seconde extrémité (22) du premier cintre (20) et la seconde extrémité (32) du second cintre (30) sont adaptées pour empêcher par emboîtement un mouvement des deux extrémités (22, 32) des cintres (20, 30) l'un par rapport à l'autre dans la direction parallèle à l'axe central (18) du collier de serrage (10) lors du raccordement par emboîtement prévu des dispositifs de crochet (42, 43).

3. Collier de serrage (10) selon la revendication précédente, dans lequel la partie en saillie (48) est en forme de languette et est adaptée pour s'engager dans un espace entre le premier cintre (20) et un tube (12) placé dans le collier de serrage (10).

4. Collier de serrage (10) selon la revendication précédente, dans lequel l'évidement (49) est délimité dans la direction axiale par deux épaulements (50) saillant vers l'extérieur du collier de serrage (10).

5. Collier de serrage (10) selon l'une quelconque des revendications précédentes, dans lequel les moyens de serrage (26, 60) relient la première extrémité (21) du premier cintre (20) avec la première extrémité (31) du second cintre (30) de manière articulée.

6. Collier de serrage (10) selon l'une quelconque des revendications précédentes, dans lequel le dispositif de serrage comprend une vis (60) traversant un trou oblong (36) à la première extrémité (31) du second cintre (30) et s'engage dans un filetage (26) à la première extrémité (21) du premier cintre (20).

7. Collier de serrage (10) selon la revendication précédente, dans lequel une cavité (38) est prévue à la première extrémité (31) du second cintre (30) pour recevoir au moins partiellement la tête (62) de la vis (60).

8. Collier de serrage (10) selon l'une quelconque des revendications précédentes, dans lequel le premier dispositif de crochet (42) et le second dispositif de crochet (43) ne forment pas une liaison par encliquetage.
